# EUROPÄISCHE PATENTSCHRIFT

(11) **EP 3 618 384 B1**
(45) Veröffentlichungstag und Bekanntmachung des Hinweises auf die Patenterteilung: **26.08.2020**
(21) Anmeldenummer: 18191982.0
(22) Anmeldetag: 31.08.2018
(51) Int. Cl.: H04L 29/06, H04L 12/26, H04L 12/24

(54) **VERFAHREN ZUR SIMULATION EINER VERARBEITUNG VON RESERVIERUNGSANFRAGEN FÜR MULTICAST-DATENSTRÖME IN KOMMUNIKATIONSNETZEN UND SIMULATIONSSYSTEM**
METHOD FOR SIMULATING A PROCESSING OF RESERVATION REQUESTS FOR MULTI CAST DATA FLOWS IN COMMUNICATION NETWORKS AND SIMULATION SYSTEM
PROCÉDÉ DE SIMULATION D'UN TRAITEMENT DES REQUÊTES DE RÉSERVATION POUR FLUX DE DONNÉES MULTIDIFFUSION DANS DES RÉSEAUX DE COMMUNICATION ET UN SYSTÈME DE SIMULATION

(43) Veröffentlichungstag der Anmeldung: 04.03.2020
(73) Patentinhaber: Siemens Aktiengesellschaft, 80333 München (DE)
(72) Erfinder: Albrecht, Harald, 90475 Nürnberg (DE); Höme, Stephan, 90475 Nürnberg (DE); Kerschbaum, Sven, 90475 Nürnberg (DE); Kießling, Marcel, 90475 Nürnberg (DE)

(56) Entgegenhaltungen:
- US-A1- 2013 138 800
- JEONG-HYUN CHO ET AL: "A Bandwidth Reservation Method for Multicast Streaming Service", 23. August 2012 (2012-08-23), CONVERGENCE AND HYBRID INFORMATION TECHNOLOGY, SPRINGER BERLIN HEIDELBERG, BERLIN, HEIDELBERG, PAGE(S) 17 - 24, XP047014502, ISBN: 978-3-642-32644-8 * das ganze Dokument *

## Beschreibung

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Multicast-Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Multicast-Datenströme oder Datenrahmen mit Echtzeitanforderungen nicht entsprechend einer angeforderten bzw. benötigten Dienstgüte übermittelt werden.

Eine priorisierte Übermittlung von Datenrahmen ist beispielsweise auf Grundlage von virtuellen lokalen Netzen bzw. Virtual Local Area Networks (VLAN) entsprechend Standard IEEE 802.1Q grundsätzlich mittels entsprechender in Datenrahmen eingefügter Tags möglich. Zur synchronisierten und priorisierten Übertragung von Audio- und Videodatenströmen (Audio/Video Bridging) über Kommunikationsnetze ist entsprechend Standard IEEE 802.1Qav eine Bandbreitenreservierung für einzelne Kommunikationsverbindungen vorgesehen, denen eine höchste Priorität zugeordnet ist. Für eine Übertragung von Audio- und Videodatenströmen benötigte Ressourcen werden dabei in Kommunikationsgeräten wie Switches reserviert. Eine Weiterleitung hochpriorisierter Datenrahmen erfolgt jedoch erst nach einer erfolgreichen Reservierung. Im Rahmen einer Bandbreitenüberwachung wird sichergestellt, dass hinsichtlich tatsächlich genutzter Bandbreite ausreichend reservierte Bandbreite vorliegt. Eine Kommunikationsverbindung, die mehr Bandbreite nutzt als reserviert ist, würde ansonsten zu einer Störung eines gesamten Kommunikationsnetzes führen, im ungünstigsten Fall zu dessen Stillstand aufgrund Überlastung.

Für die gesicherte Übertragung von Audio- und Videodatenströmen über Ethernet-basierte Kommunikationsnetze sind entsprechend Standard IEEE 802.1 Qbv sind Credit-based Shaper (CBS) als Maß für eine Bandbreitenüberwachung definiert worden. Durch Credit-based Shaper wird nach jedem übertragenen Datenrahmen eine Übertragungspause definiert, um eine Bandbreitenbegrenzung in Bezug auf eine reservierte Bandbreite sicherzustellen. Derartige Zwangspausen sind jedoch in industriellen Automatisierungssystemen bei einer Übertragung von vielen Datenrahmen mit geringem Nutzdateninhalt für Steuerungsdaten, die eher als Datenbündel bzw. Bursts anzusehen sind, äußerst problematisch.

DE 10 138 363 A1 offenbart ein Verfahren zur Gewährleistung der Dienstgüte von Internet-Anwendungen, bei dem Internet-Anwendungen unter Ausnutzung der zum Startzeitpunkt der Internet-Anwendung vorhandenen Ressourcen des IP-Zugangsnetzes und des Endsystems automatisch angepasst und optimiert werden. Von Internet-Anwendungen werden die QoS-Kommunikationsanforderungen (Quality of Service) an das IP-Zugangsnetz erfasst und als Anwendungsprofile gespeichert. Bei Aktivierung einer Internet-Anwendung werden die aktuell vorhandenen Netzressourcen des IP-Zugangsnetzes mit den gespeicherten Anwendungsprofilen verglichen, und es werden Steuerdaten ermittelt. Anhand der ermittelten Steuerdaten wird die Bereitstellung der Netzressourcen für die betreffende Internet-Anwendung optimiert. Die Optimierung bezieht sich dabei auf einen angepassten zeitlichen Ablauf und die Ermittlung der unter Kostenaspekten (Übertragungskosten) günstigsten Konstellation.

Entsprechend EP 3 038 325 A1 werden zur Datenübermittlung in einem Kommunikationsnetz eines industriellen Automatisierungssystems erste Datenrahmen, die Steuerungsdaten für das Automatisierungssystem umfassen, durch Koppel-Kommunikationsgeräte des Kommunikationsnetzes nur innerhalb periodischer erster Zeitintervalle übermittelt. Zweite Datenrahmen, die Sequenzen von Datenrahmen umfassenden Datenströmen zugeordnet sind, bzw. dritte Datenrahmen, für deren Übermittlung keine oder eine unter einem vorgegebenen Schwellwert liegende Dienstgüte festgelegt ist, werden innerhalb periodischer zweiter Zeitintervalle übermittelt. Die ersten Zeitintervalle sind in erste und zweite Teilintervall unterteilt. Weiterzuleitende erste Datenrahmen werden Teilintervall-alternierend in eine erste bzw. zweite Warteschlange eingefügt und alternierend aus den Warteschlangen für eine Weiterleitung entnommen.

JEONG-HYUN CHO ET AL: "A Bandwidth Reservation Method for Multicast Streaming Service", 23. August 2012 (2012-08-23), CONVERGENCE AND HYBRID INFORMATION TECHNOLOGY, SPRINGER BERLIN HEIDELBERG, BERLIN, HEIDELBERG, PAGE(S) 17 - 24, XP047014502, ISBN: 978-3-642-32644-8 sowie US 2013/138800 A1 beschreiben weitere Systeme aus dem Stand der Technik.

Entsprechend IEEE 802.1Qcc (Stream Reservation Protocol (SRP) Enhancements and Performance Improvements) ist insbesondere für Time-Sensitive Networking vorgesehen, dass Endstationen, beispielsweise Automatisierungsgeräte, in Kommunikationsnetzen zur Übermittlung von Multicast-Datenströmen mit gewünschten Dienstgüteparametern (Quality of Service) erforderliche Ressourcen mittels Reservierungsanfragen reservieren können. In Abhängigkeit von im Kommunikationsnetz verfügbaren Ressourcen werden Reservierungsanfragen erfüllt oder abgelehnt. Für Entscheidungen über Reservierungsanfragen erforderliche Berechnungen werden wahlweise auf Basis eines dezentralen bzw. eines zentralen Konfigurationsmodells durchgeführt. Beim dezentralen Konfigurationsmodell ermitteln Bridges bzw. Switches jeweils für sich bereits anderweitig genutzte sowie noch verfügbare Ressourcen und teilen der jeweiligen Endstation dementsprechend mit, ob ihre Reservierungsanfrage erfüllt werden kann. Problematisch dabei ist, dass die Bridges bzw. Switches nur ihre eigenen Produkt- bzw. Hardware-spezifischen Parameter kennen, insbesondere nicht aber die von Mitbewerber-Produkten. Auch beim zentralen Konfigurationsmodell, bei dem eine zentrale Instanz die erforderlichen Berechnungen durchführt, stellt sich dieses Problem.

Bei einer Planung von Kommunikationsnetzen sowie von über diese Kommunikationsnetze zu realisierenden industriellen Steuerungsanwendungen ist eine möglichst frühzeitige Verifizierung wichtig, ob in Bezug auf die Steuerungsanwendungen bestehende Dienstgüteanforderungen mittels eines gegebenen Planungsstandes erfüllt werden können. Auch nach einem Aufbau bzw. einer Inbetriebnahme eines Kommunikationsnetzes für ein industrielles Automatisierungssystems sind entsprechende Überprüfungen von Bedeutung, beispielsweise um Auswirkungen von Anlagenerweiterungen rechtzeitig beurteilen zu können.

Der vorliegenden Erfindung liegt daher die Aufgabe zugrunde, ein Verfahren zur Simulation einer Verarbeitung von Reservierungsanfragen für Multicast-Datenströme in Kommunikationsnetzen zu schaffen, das keine weitgehende Offenlegung von Produkt- bzw. Hardware-spezifischen Parametern zu hinsichtlich ihres Verhaltens zu analysierenden Netzinfrastrukturgeräten erfordert, und ein geeignetes Simulationssystem anzugeben.

Diese Aufgabe wird erfindungsgemäß durch ein Verfahren mit den in Anspruch 1 angegebenen Merkmalen und durch ein Simulationssystem mit den in Anspruch 11 angegebenen Merkmalen gelöst. Vorteilhafte Weiterbildungen sind in den abhängigen Ansprüchen angegeben.

Erfindungsgemäß werden zur Simulation einer Verarbeitung von Reservierungsanfragen für Multicast-Datenströme in Kommunikationsnetzen hinsichtlich ihres Verhaltens zu simulierende Kommunikationsgeräte jeweils funktional in eine als Control Plane bezeichnete Kommunikationssteuerungsebene sowie in eine als Data Plane bezeichnete Datenübermittlungsebene unterteilt. Dabei sind die Kommunikationsgeräte innerhalb einer vorgegebenen Topologie miteinander verbunden und umfassen Kommunikationsendgeräte an Anfangs- bzw. Endknoten von Pfaden für Multicast-Datenströme und Netzinfrastrukturgeräte, insbesondere Router, Switches oder Bridges, an Zwischenknoten. Die Kommunikationsendgeräte an den Anfangsknoten spezifizieren zur Reservierung von durch die Netzinfrastrukturgeräte an den Zwischenknoten bereitzustellenden Ressourcen jeweils Dienstgüteparameter für die Multicast-Datenströme. Demgegenüber spezifizieren die Kommunikationsendgeräte an den Endknoten für eine Reservierungsanfrage jeweils einen Multicast-Datenstrom-Identifikator. Die Netzinfrastrukturgeräte an den Zwischenknoten bzw. eine übergeordnete Steuerungseinrichtung überprüfen bzw. überprüft bei einer Reservierungsanfrage jeweils, ob in den Netzinfrastrukturgeräten entlang des jeweiligen Pfades ausreichende Ressourcen zur Datenübermittlung unter Einhaltung der spezifizierten Dienstgüteparameter verfügbar sind. Bei ausreichenden Ressourcen wird jeweils eine dem spezifizierten Multicast-Datenstrom-Identifikator zugeordnete Multicast-Adresse an ein anfragendes Kommunikationsendgerät an einem Endknoten übermittelt, so dass dieses auf den Multicast-Datenstrom zugreifen kann.

Die durch die Netzinfrastrukturgeräte auf der Data Plane bereitgestellten Ressourcen umfassen beispielsweise Bandbreite, Queue-Anzahl, Queue-Cache bzw. Adress-Cache des jeweiligen Netzinfrastrukturgeräts. Außerdem werden die Reservierungsanfragen vorzugsweise entsprechend IEEE 802.1Qcc behandelt. Dabei kann den Kommunikationsendgeräten an den Anfangsknoten jeweils eine Talker-Funktion zugeordnet sein, während den Kommunikationsendgeräten an den Endknoten jeweils eine Listener-Funktion zugeordnet sein kann.

Für der Control Plane zugeordnete Funktionen der Kommunikationsgeräte werden erfindungsgemäß jeweils Simulationssystem-Komponenten bereitgestellt, die durch in einer Ablaufsteuerungsumgebung ausführbare Software-Container gebildet werden. Vorzugsweise basieren die Software-Container auf Control Plane Firmware der Kommunikationsgeräte. Darüber hinaus werden die Netzinfrastrukturgeräte auf der Data Plane erfindungsgemäß durch mittels der Netzinfrastrukturgeräte jeweils bereitgestellte Ressourcen modelliert. Die den Kommunikationsgeräten zugeordneten Software-Container entsprechend der vorgegebenen Topologie werden selektiv in der Ablaufsteuerungsumgebung ausgeführt und dort miteinander gekoppelt. Dabei werden die Software-Container für die Kommunikationsendgeräte an den Anfangs- bzw. Endknoten während der Simulation entsprechend Angaben zu einem jeweils bereitgestellten bzw. angeforderten Multicast-Datenstrom ausgeführt. Mittels der Simulation wird überprüft, ob entsprechend Reservierungsanfragen angeforderte Multicast-Datenströme unter Einhaltung der spezifizierten Dienstgüteparameter bereitstellbar sind.

Die vorliegende Erfindung ermöglicht ein genaues Vorab-Validieren insbesondere von TSN-Dienstegüte-Anforderungen ohne notwendigerweise auf exakte Gerätebeschreibungen angewiesen zu sein. Dabei können Produkt- bzw. Hardware-spezifischen Parameter in den Software-Containern verborgen werden. Basieren diese auf der Control Plane Firmware der Kommunikationsgeräte, entspricht das simulierte Verhalten dem tatsächlichen Verhalten.

Entsprechend einer vorteilhaften Ausgestaltung der vorliegenden Erfindung werden Informationen über die innerhalb der vorgegebenen Topologie miteinander verbundenen Kommunikationsgeräte und die vorgegebene Topologie mittels einer Netzwerk-Gerätesuche (network device discovery) erfasst bzw. aus einem Engineering-System abgerufen. Auf diese Weise können für die Simulation erforderliche Informationen aufwandsarm bereitgestellt werden. Darüber hinaus werden Speicherabbilder für die Software-Container vorzugsweise aus einem durch eine Vielzahl von Nutzern lesend bzw. schreibend zugreifbaren Speicher- und Bereitstellungssystem (container image repository) abgerufen. Somit können den Kommunikationsgeräten zugeordnete erforderliche Simulationssystem-Komponenten auf einfache Weise und automatisierbar zugeliefert werden.

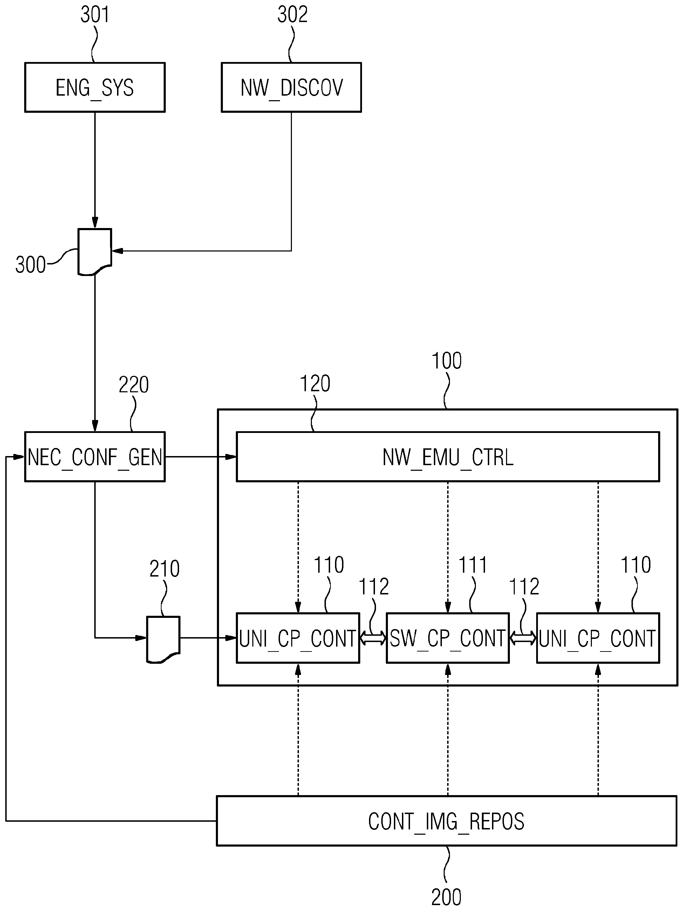

Die vorliegende Erfindung wird nachfolgend an einem Ausführungsbeispiel anhand der Zeichnung näher erläutert. Es zeigt die
- Figur: eine schematische Darstellung eines Simulationssystems zur Simulation einer Verarbeitung von Reservierungsanfragen für Multicast-Datenströme in Kommunikationsnetzen.

Das in der Figur dargestellte Simulationssystem umfasst einen Konfigurationsgenerator 220 für einen Controller 120 eines Netzwerk-Emulators 100. Dabei stellt der Netzwerk-Emulator 100 eine Ablaufsteuerungsumgebung für Simulationssystem-Komponenten bereit, die hinsichtlich ihres Verhaltens zu simulierenden Kommunikationsgeräten zugeordnet sind. Die Kommunikationsgeräte sind innerhalb einer vorgegebenen Topologie miteinander verbunden und umfassen Kommunikationsendgeräte an Anfangs- bzw. Endknoten von Pfaden für Multicast-Datenströme und Netzinfrastrukturgeräte an Zwischenknoten.

Die Kommunikationsendgeräte an den Anfangs- bzw. Endknoten können beispielsweise Steuerungsgeräte eines industriellen Automatisierungssystems, insbesondere speicherprogrammierbare Steuerungen, oder Feldgeräte sein, beispielsweise Sensoren oder Aktoren für die Steuerungsgeräte gesteuerte Maschinen oder Vorrichtungen. Vorzugsweise sind die Steuerungsgeräte über ein als Time-sensitive Network entsprechend IEEE 802.1 Q und IEEE 802.1 Qbv ausgestaltetes und eingerichtetes Kommunikationsnetz mit den Feldgeräten verbunden. Die Netzinfrastrukturgeräte an den Zwischenknoten umfassen insbesondere Router, Switches und Bridges umfassen und leiten Datagramme innerhalb des Kommunikationsnetzes weiter.

Die hinsichtlich ihres Verhaltens zu simulierenden Kommunikationsgeräte werden jeweils funktional in eine als Control Plane bezeichnete Kommunikationssteuerungsebene sowie in eine als Data Plane bezeichnete Datenübermittlungsebene unterteilt. Für der Control Plane zugeordnete Funktionen der Kommunikationsgeräte werden jeweils Simulationssystem-Komponenten bereitgestellt, die durch in der Ablaufsteuerungsumgebung des Netzwerk-Emulators ausführbare Software-Container 110, 111 gebildet werden. Als Vorteil ergibt sich, dass eine Spezifizierung üblicherweise vertraulich behandelter Details zu Funktionen oder Gerätekomponenten, die der Control Plane zugeordnet sind, nicht erforderlich ist, da diese Details in den Software-Containern 110, 111 verborgen werden können. Mittels der Control Plane zugeordneten Funktionen können beispielsweise Routing-Tabellen bzw. Forwarding-Tabellen für die Netzinfrastrukturgeräte vorgegeben werden.

Die Software-Container 110, 111 basieren vorzugsweise auf bekannten Konzepten zur Containervirtualisierung, die auf eine gemeinsame Nutzung eines Betriebssystem-Kernels durch Host-System und in Containern ablaufender Software sowie auf eine Isolation ausgewählter Betriebssystemmitteln untereinander abzielen. Hierfür sind beispielsweise Control Groups und Namespacing wichtige Aspekte. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Auf der Data Plane werden die Netzinfrastrukturgeräte dagegen lediglich anhand von Informationen über Ressourcen modelliert, die durch die Netzinfrastrukturgeräte jeweils bereitgestellt werden. Die durch die Netzinfrastrukturgeräte auf der Data Plane bereitgestellten Ressourcen umfassen insbesondere Bandbreite, Queue-Anzahl, Queue-Cache bzw. Adress-Cache des jeweiligen Netzinfrastrukturgeräts.

Der Konfigurationsgenerator 220 erzeugt im vorliegenden Ausführungsbeispiel aus einem Netzgeräte- und Netzwerkverschaltungsplan 300 vom Controller 120 des Netzwerk-Emulators 100 benötigte Informationen über zu startende Software-Container 110, 111 sowie deren Netzwerk-seitige Verschaltung 112, die dem Netzgeräte- und Netzwerkverschaltungsplan 300 entspricht. Auf dieser Grundlage werden die den Kommunikationsgeräten zugeordneten Software-Container 110, 111 entsprechend der vorgegebenen Topologie selektiv in der Ablaufsteuerungsumgebung des Netzwerk-Emulators 100 ausgeführt und dort miteinander gekoppelt. Informationen über die innerhalb der vorgegebenen Topologie miteinander verbundenen Kommunikationsgeräte und die vorgegebene Topologie werden vorzugsweise mittels eines Werkzeugs 302 zur Netzwerk-Erkennung erfasst bzw. aus einem Engineering-System 301 abgerufen.

Der Netzgeräte- und Netzwerkverschaltungsplan 300 umfasst auch eine Beschreibung mittels Simulation zu analysierender Reservierungsanfragen für Multicast-Datenströme und Dienstgüteparameter. Diese Information liegen im Engineering-System 301 vor oder können mittels des Werkzeugs 302 zur Netzwerk-Erkennung aus in einem realen Netz protokollierten Dienstgüte-Anforderungen abgeleitet werden. Die Dienstgüteparameter, beispielsweise Bandbreite und Latenz, werden für die Multicast-Datenströme durch die Kommunikationsendgeräte an den Anfangsknoten zur Reservierung von durch die Netzinfrastrukturgeräte an den Zwischenknoten bereitzustellenden Ressourcen spezifiziert. Korrespondierend dazu spezifizieren die Kommunikationsendgeräte an den Endknoten für eine Reservierungsanfrage jeweils einen Multicast-Datenstrom-Identifikator. Der Multicast-Datenstrom-Identifikator weist als zugeordnete Informationen insbesondere Bandbreite, Latenz und Multicast-Adresse des jeweiligen Multicast-Datenstroms auf.

Darüber hinaus erzeugt der Konfigurationsgenerator 220 Datensätze 210 über gewünschte Reservierungen von Multicast-Datenströmen und stellt diese insbesondere an die Software-Container 110 für die Kommunikationsendgeräte bereit. Auf dieser Grundlage werden die Software-Container 110 für die Kommunikationsendgeräte an den Anfangs- bzw. Endknoten während der Simulation entsprechend Angaben zu einem jeweils bereitgestellten bzw. angeforderten Multicast-Datenstrom ausgeführt.

Im vorliegenden Ausführungsbeispiel werden die Reservierungsanfragen entsprechend IEEE 802.1Qcc behandelt. Dabei ist den Kommunikationsendgeräten an den Anfangsknoten jeweils eine Talker-Funktion zugeordnet, während den Kommunikationsendgeräten an den Endknoten jeweils eine Listener-Funktion zugeordnet ist. Die Netzinfrastrukturgeräte an den Zwischenknoten bzw. eine übergeordnete Steuerungseinrichtung überprüfen bzw. überprüft im Rahmen einer Verarbeitung einer Reservierungsanfrage jeweils, ob in den Netzinfrastrukturgeräten entlang des jeweiligen Pfades ausreichende Ressourcen zur Datenübermittlung unter Einhaltung der spezifizierten Dienstgüteparameter verfügbar sind.

Beispielsweise kann im Rahmen einer Simulation einer Verarbeitung von Reservierungsanfragen wird für virtuelle Ingress- und Egress-Ports der Netzinfrastrukturgeräte überprüft werden, ob im jeweiligen Netzinfrastrukturgerät hinsichtlich Bandbreite, Queue-Anzahl, Queue-Cache und Adress-Cache ausreichende Ressourcen zur Verfügung stehen. Insbesondere ist grundsätzlich bei einer Reservierung von Ressourcen für Multicast-Datenströme zumindest sicher zu stellen, dass die Multicast-Adresse des jeweiligen Multicast-Datenstroms in den Adress-Cache eintragbar ist. Ergibt die Simulation, dass jeweils ausreichende Ressourcen zur Verfügung stehen, wird eine dem spezifizierten Multicast-Datenstrom-Identifikator zugeordnete Multicast-Adresse an ein anfragendes Kommunikationsendgerät an einem Endknoten übermittelt.

Als Ergebnis der Simulation wird also überprüft, ob entsprechend Reservierungsanfragen angeforderte Multicast-Datenströme unter Einhaltung der spezifizierten Dienstgüteparameter bereitstellbar sind. Dabei wird mittels der Software-Container 110 für die Kommunikationsendgeräte an den Endknoten während der Simulation entsprechend dem vorliegenden Ausführungsbeispiel protokolliert, ob überprüfte Reservierungsanfragen erfüllbar sind.

Die Software-Container 110, 110 basieren vorzugsweise direkt auf Control Plane Firmware der Kommunikationsgeräte und werden über ein Container Image Repository 200 bereitgestellt. Das Container Image Repository 200 ist ein durch eine Vielzahl von Nutzern lesend bzw. schreibend zugreifbares Speicher- und Bereitstellungssystem, aus dem pro Firmware-Stand Speicherabbilder für die Software-Container 110, 111 abrufbar sind.

## Patentansprüche

1. Verfahren zur Simulation einer Verarbeitung von Reservierungsanfragen für Multicast-Datenströme in Kommunikationsnetzen, bei dem
- Kommunikationsgeräte innerhalb einer vorgegebenen Topologie miteinander verbunden sind und Kommunikationsendgeräte an Anfangs- und/oder Endknoten von Pfaden für Multicast-Datenströme und Netzinfrastrukturgeräte an Zwischenknoten umfassen,
- die Kommunikationsendgeräte an den Anfangsknoten zur Reservierung von durch die Netzinfrastrukturgeräte an den Zwischenknoten bereitzustellenden Ressourcen jeweils Dienstgüteparameter für die Multicast-Datenströme spezifizieren,
- die Kommunikationsendgeräte an den Endknoten für eine Reservierungsanfrage jeweils einen Multicast-Datenstrom-Identifikator spezifizieren,
- die Netzinfrastrukturgeräte an den Zwischenknoten und/oder eine übergeordnete Steuerungseinrichtung bei einer Reservierungsanfrage jeweils überprüfen/überprüft, ob in den Netzinfrastrukturgeräten entlang des jeweiligen Pfades ausreichende Ressourcen zur Datenübermittlung unter Einhaltung der spezifizierten Dienstgüteparameter verfügbar sind,
- bei ausreichenden Ressourcen jeweils eine dem spezifizierten Multicast-Datenstrom-Identifikator zugeordnete Multicast-Adresse an ein anfragendes Kommunikationsendgerät an einem Endknoten übermittelt wird,
**dadurch gekennzeichnet, dass**
- hinsichtlich ihres Verhaltens zu simulierende Kommunikationsgeräte jeweils funktional in eine als Control Plane bezeichnete Kommunikationssteuerungsebene sowie in eine als Data Plane bezeichnete Datenübermittlungsebene unterteilt werden,
- für der Control Plane zugeordnete Funktionen der Kommunikationsgeräte jeweils Simulationssystem-Komponenten bereitgestellt werden, die durch in einer Ablaufsteuerungsumgebung ausführbare Software-Container (110, 111) gebildet werden,
- die Netzinfrastrukturgeräte auf der Data Plane durch mittels der Netzinfrastrukturgeräte jeweils bereitgestellte Ressourcen modelliert werden,
- die den Kommunikationsgeräten zugeordneten Software-Container (110, 111) entsprechend der vorgegebenen Topologie selektiv in der Ablaufsteuerungsumgebung ausgeführt und dort miteinander gekoppelt werden,
- die Software-Container (110, 111) für die Kommunikationsendgeräte an den Anfangs- und/oder Endknoten während der Simulation entsprechend Angaben zu einem jeweils bereitgestellten und/oder angeforderten Multicast-Datenstrom ausgeführt werden,
- mittels der Simulation überprüft wird, ob entsprechend Reservierungsanfragen angeforderte Multicast-Datenströme unter Einhaltung der spezifizierten Dienstgüteparameter bereitstellbar sind.

2. Verfahren nach Anspruch 1,
bei dem Informationen über die innerhalb der vorgegebenen Topologie miteinander verbundenen Kommunikationsgeräte und die vorgegebene Topologie mittels einer Netzwerk-Gerätesuche erfasst und/oder aus einem Engineering-System abgerufen werden.

3. Verfahren nach einem der Ansprüche 1 oder 2,
bei dem durch die Netzinfrastrukturgeräte Datagramme innerhalb des Kommunikationsnetzes weitergeleitet werden.

4. Verfahren nach Anspruch 3,
bei dem die Netzinfrastrukturgeräte Router und/oder Switches umfassen und bei dem mittels der Control Plane zugeordneten Funktionen Routing-Tabellen und/oder Forwarding-Tabellen für die Netzinfrastrukturgeräte vorgegeben werden.

5. Verfahren nach einem der Ansprüche 1 bis 4,
bei dem die durch die Netzinfrastrukturgeräte auf der Data Plane bereitgestellten Ressourcen Bandbreite, Queue-Anzahl, Queue-Cache und/oder Adress-Cache des jeweiligen Netzinfrastrukturgeräts umfassen.

6. Verfahren nach einem der Ansprüche 1 bis 5,
bei dem die Reservierungsanfragen entsprechend IEEE 802.1Qcc behandelt werden.

7. Verfahren nach Anspruch 6,
bei dem den Kommunikationsendgeräten an den Anfangsknoten jeweils eine Talker-Funktion zugeordnet ist und bei dem den Kommunikationsendgeräten an den Endknoten jeweils eine Listener-Funktion zugeordnet ist.

8. Verfahren nach einem der Ansprüche 1 bis 7,
bei dem die Software-Container auf Control Plane Firmware der Kommunikationsgeräte basieren.

9. Verfahren nach Anspruch 8,
bei dem Speicherabbilder für die Software-Container aus einem durch eine Vielzahl von Nutzern lesend und/oder schreibend zugreifbaren Speicher- und Bereitstellungssystem abrufbar sind.

10. Verfahren nach einem der Ansprüche 1 oder 9,
bei dem mittels der Software-Container für die Kommunikationsendgeräte an den Endknoten während der Simulation protokolliert wird, ob überprüfte Reservierungsanfragen erfüllbar sind.

11. Simulationssystem zur Durchführung eines Verfahrens nach einem der Ansprüche 1 bis 10, wobei das Simulationssystem dafür ausgestaltet und eingerichtet ist, dass
- hinsichtlich ihres Verhaltens zu simulierende Kommunikationsgeräte jeweils funktional in eine als Control Plane bezeichnete Kommunikationssteuerungsebene sowie in eine als Data Plane bezeichnete Datenübermittlungsebene unterteilt werden, wobei die Kommunikationsgeräte innerhalb einer vorgegebenen Topologie miteinander verbunden sind und Kommunikationsendgeräte an Anfangs- und/oder Endknoten von Pfaden für Multicast-Datenströme und Netzinfrastrukturgeräte an Zwischenknoten umfassen,
- für der Control Plane zugeordnete Funktionen der Kommunikationsgeräte jeweils Simulationssystem-Komponenten bereitgestellt werden, die durch in einer Ablaufsteuerungsumgebung ausführbare Software-Container (110, 111) gebildet werden,
- die Netzinfrastrukturgeräte auf der Data Plane durch mittels der Netzinfrastrukturgeräte jeweils bereitgestellte Ressourcen modelliert werden,
- die den Kommunikationsgeräten zugeordneten Software-Container (110, 111) entsprechend der vorgegebenen Topologie selektiv in der Ablaufsteuerungsumgebung ausgeführt und dort miteinander gekoppelt werden,
- die Software-Container (110, 111) für die Kommunikationsendgeräte
an den Anfangs- und/oder Endknoten während der Simulation entsprechend Angaben zu einem jeweils bereitgestellten und/oder angeforderten Multicast-Datenstrom ausgeführt werden,
- mittels der Simulation überprüft wird, ob entsprechend Reservierungsanfragen angeforderte Multicast-Datenströme unter Einhaltung der spezifizierten Dienstgüteparameter bereitstellbar sind.

12. Simulationssystem nach Anspruch 11,
dafür ausgestaltet und eingerichtet, dass Informationen über die innerhalb der vorgegebenen Topologie miteinander verbundenen Kommunikationsgeräte und die vorgegebene Topologie mittels einer Netzwerk-Gerätesuche erfasst und/oder aus einem Engineering-System abgerufen werden.

13. Simulationssystem nach einem der Ansprüche 11 oder 12,
bei dem die durch die Netzinfrastrukturgeräte auf der Data Plane bereitgestellten Ressourcen Bandbreite, Queue-Anzahl, Queue-Cache und/oder Adress-Cache des jeweiligen Netzinfrastrukturgeräts umfassen.

14. Simulationssystem nach einem der Ansprüche 11 bis 13,
dafür ausgestaltet und eingerichtet, dass die Reservierungsanfragen entsprechend IEEE 802.1Qcc behandelt werden.

15. Simulationssystem nach einem der Ansprüche 11 bis 14,
bei dem die Software-Container auf Control Plane Firmware der Kommunikationsgeräte basieren.

16. Simulationssystem nach Anspruch 15,
dafür ausgestaltet und eingerichtet, dass Speicherabbilder für die Software-Container aus einem durch eine Vielzahl von Nutzern lesend und/oder schreibend zugreifbaren Speicher- und Bereitstellungssystem abgerufen werden.

## Claims

1. Method for simulating processing of reservation requests for multicast data streams in communication networks, in which
- communication devices are connected to one another within a predefined topology and comprise communication terminals at start and/or end nodes of paths for multicast data streams and network infrastructure devices at intermediate nodes,
- the communication terminals at the start nodes each specify quality of service parameters for the multicast data streams for the purpose of reserving resources to be provided by the network infrastructure devices at the intermediate nodes,
- the communication terminals at the end nodes each specify a multicast data stream identifier for a reservation request,
- the network infrastructure devices at the intermediate nodes and/or a superordinate control device respectively check(s), in the case of a reservation request, whether sufficient resources for transmitting data while complying with the specified quality of service parameters are available in the network infrastructure devices along the respective path,
- in the case of sufficient resources, a multicast address assigned to the specified multicast data stream identifier is respectively transmitted to a requesting communication terminal at an end node,
**characterized in that**
- communication devices to be simulated in terms of their behaviour are each functionally subdivided into a communication control plane referred to as a control plane and a data transmission plane referred to as a data plane,
- simulation system components which are formed by software containers (110, 111) executable in a sequence control environment are respectively provided for functions of the communication devices assigned to the control plane,
- the network infrastructure devices on the data plane are modelled by resources respectively provided by means of the network infrastructure devices,
- the software containers (110, 111) assigned to the communication devices are selectively executed in the sequence control environment according to the predefined topology and are coupled to one another there,
- the software containers (110, 111) for the communication terminals at the start and/or end nodes are executed during the simulation according to details of a respectively provided and/or requested multicast data stream,
- the simulation is used to check whether multicast data streams requested according to reservation requests can be provided while complying with the specified quality of service parameters.

2. Method according to Claim 1,
in which information relating to the communication devices connected to one another within the predefined topology and the predefined topology are captured by means of a network device search and/or are retrieved from an engineering system.

3. Method according to either of Claims 1 and 2,
in which datagrams are forwarded within the communication network by the network infrastructure devices.

4. Method according to Claim 3,
in which the network infrastructure devices comprise routers and/or switches, and in which routing tables and/or forwarding tables are predefined for the network infrastructure devices by means of functions assigned to the control plane.

5. Method according to one of Claims 1 to 4,
in which the resources provided by the network infrastructure devices on the data plane comprise bandwidth, queue number, queue cache and/or address cache of the respective network infrastructure device.

6. Method according to one of Claims 1 to 5,
in which the reservation requests are handled according to IEEE 802.1Qcc.

7. Method according to Claim 6,
in which a talker function is respectively assigned to the communication terminals at the start nodes, and in which a listener function is respectively assigned to the communication terminals at the end nodes.

8. Method according to one of Claims 1 to 7,
in which the software containers are based on control plane firmware of the communication devices.

9. Method according to Claim 8,
in which memory maps for the software containers can be retrieved from a memory and provision system to which a multiplicity of users can have read and/or write access.

10. Method according to either of Claims 1 and 9,
in which the software containers for the communication terminals at the end nodes are used during the simulation to record whether checked reservation requests can be satisfied.

11. Simulation system for carrying out a method according to one of Claims 1 to 10, wherein the simulation system is configured and set up such that
- communication devices to be simulated in terms of their behaviour are each functionally subdivided into a communication control plane referred to as a control plane and a data transmission plane referred to as a data plane, wherein the communication devices are connected to one another within a predefined topology and comprise communication terminals at start and/or end nodes of paths for multicast data streams and network infrastructure devices at intermediate nodes,
- simulation system components which are formed by software containers (110, 111) executable in a sequence control environment are respectively provided for functions of the communication devices assigned to the control plane,
- the network infrastructure devices on the data plane are modelled by resources respectively provided by means of the network infrastructure devices,
- the software containers (110, 111) assigned to the communication devices are selectively executed in the sequence control environment according to the predefined topology and are coupled to one another there,
- the software containers (110, 111) for the communication terminals at the start and/or end nodes are executed during the simulation according to details of a respectively provided and/or requested multicast data stream,
- the simulation is used to check whether multicast data streams requested according to reservation requests can be provided while complying with the specified quality of service parameters.

12. Simulation system according to Claim 11,
configured and set up such that information relating to the communication devices connected to one another within the predefined topology and the predefined topology are captured by means of a network device search and/or are retrieved from an engineering system.

13. Simulation system according to either of Claims 11 and 12,
in which the resources provided by the network infrastructure devices on the data plane comprise bandwidth, queue number, queue cache and/or address cache of the respective network infrastructure device.

14. Simulation system according to one of Claims 11 to 13,
configured and set up such that the reservation requests are handled according to IEEE 802.1Qcc.

15. Simulation system according to one of Claims 11 to 14,
in which the software containers are based on control plane firmware of the communication devices.

16. Simulation system according to Claim 15,
configured and set up such that memory maps for the software containers are retrieved from a memory and provision system to which a multiplicity of users can have read and/or write access.

## Revendications

1. Procédé de simulation d'un traitement de requêtes de réservation de flux de données multidiffusion dans des réseaux de communication, dans lequel
- des appareils de communication sont reliés entre eux au sein d'une topologie donnée à l'avance et comprennent des terminaux de communication à des nœuds de début et/ou de fin de trajet de flux de données multidiffusion et des appareils d'infrastructure de réseau à des nœuds intermédiaires,
- les terminaux de communication spécifient, respectivement des paramètres de qualité de service pour les flux de données multidiffusion aux nœuds de début pour la réservation de ressources à mettre à disposition par les appareils d'infrastructure de réseau aux nœuds intermédiaire,
- les terminaux de communication spécifient, respectivement un identifiant de flux de données multidiffusion aux nœuds de fin pour une requête de réservation,
- les appareils d'infrastructure de réseau aux nœuds intermédiaires et/ou un dispositif de commande supérieur hiérarchiquement contrôlent chacun/ contrôle, lors d'une requête de réservation, si sont disponibles, dans les appareils d'infrastructure de réseau, le long du trajet respectif, des ressources suffisantes pour la transmission de données, en conservant les paramètres de qualité de service spécifiés,
- si les ressources sont suffisantes, une adresse multidiffusion, associée à l'identifiant de flux de données multidiffusion spécifié, est transmise à un terminal de communication requérant à un nœud de fin,
**caractérisé en ce que**
- l'on subdivise des appareils de communication à simuler en ce qui concerne leur comportement, respectivement fonctionnellement en un plan de commande de communication désigné par control plane, ainsi qu'en un plan de transmission de données désigné par data plane,
- pour des fonctions associées au control plane des appareils de communication, on met à disposition, respectivement, des composants de système de simulation, qui sont formés par des software-container (110, 111) pouvant être réalisés dans un environnement de commande de déroulement,
- on modélise les appareils d'infrastructure de réseau sur le data plane par des ressources mises à disposition, respectivement, au moyen des appareils d'infrastructure de réseau,
- on réalise sélectivement dans l'environnement de commande de déroulement, conformément à la topologie donnée à l'avance, les software-container (110, 111) associés aux appareils de communication et on les y couple entre eux,
- on exécute aux nœuds de début et/ou de fin pendant la simulation des indications correspondant à un flux de données multidiffusion, respectivement mis à disposition et/ou requis,
- au moyen de la simulation on contrôle, si des flux de données multidiffusion requis conformément aux requêtes de réservation peuvent être mis à disposition en conservant les paramètres de qualité de service spécifiés.

2. Procédé suivant la revendication 1,
dans lequel on saisit des informations sur les appareils de communication reliés entre eux au sein de la topologie donnée à l'avance et la topologie donnée à l'avance au moyen d'une recherche d'appareil de réseau et/ou on va les chercher dans un système d'ingénierie.

3. Procédé suivant l'une des revendications 1 ou 2,
dans lequel on achemine, dans le réseau de communication, des datagrammes par les appareils d'infrastructure de réseau.

4. Procédé suivant la revendication 3,
dans lequel les appareils d'infrastructure de réseau comprennent des routeurs et/ou des switches et dans lequel on prescrit, au moyen de fonctions associées au control plane des tables de routing et/ou des tables de forwarding des appareils d'infrastructure de réseau.

5. Procédé suivant l'une des revendications 1, à 4,
dans lequel les ressources mises à disposition par les appareils d'infrastructure de réseau sur le data plane comprennent une largeur de bande, un nombre de queue, un cache de queue et/ou un cache d'adresse de l'appareil d'infrastructure de réseau respectif.

6. Procédé suivant l'une des revendications 1 à 5, dans lequel on traite les requêtes de réservation suivant IEEE 802.1Qcc.

7. Procédé suivant la revendication 6,
dans lequel aux terminaux de communication est associé aux nœuds de début, respectivement, une fonction talker et dans lequel aux terminaux de communication et aux nœud de fin est associé, respectivement, une fonction listener.

8. Procédé suivant l'une des revendications 1 à 7,
dans lequel les software-container reposent sur des control plane firmware des appareils de communication.

9. Procédé suivant la revendication 8,
dans lequel des reproducteurs de mémoire des software-container peuvent être recherchés dans un système de mémoire et de mise à disposition accessible en lecture et/ou en écriture à une pluralité d'utilisateurs.

10. Procédé suivant l'une des revendications 1 ou 9,
dans lequel, au moyen des software-container des terminaux de communication, on peut, sur les nœuds de fin, pendant la simulation, consigner si les requêtes de réservation contrôlées peuvent être satisfaites.

11. Système de simulation pour effectuer un procédé suivant l'une des revendications 1 à 10, le système de simulation étant conformé et conçu de manière à ce que
- l'on subdivise des appareils de communication à simuler, en ce qui concerne leur comportement, respectivement fonctionnellement en un plan de commande de communication désigné par control plane, ainsi qu'en un plan de transmission de données désigné par data plane, les appareils de communication étant reliés entre eux au sein d'une topologie donnée à l'avance et comprenant des terminaux de communication aux nœuds de début et/ou de fin de trajet de flux de données multidiffusion et des appareils d'infrastructure de réseau à des nœuds intermédiaires,
- pour des fonctions associées au control plane des appareils de communication, on met à disposition, respectivement, des composants de système de simulation, qui sont formés par des software-container (110, 111) pouvant être réalisés dans un environnement de commande de déroulement,
- on modélise les appareils d'infrastructure de réseau sur le data plane par des ressources mises à disposition, respectivement, au moyen des appareils d'infrastructure de réseau,
- on réalise sélectivement dans l'environnement de commande de déroulement, conformément à la topologie donnée à l'avance, les software-container (110, 111) associés aux appareils de communication et on les y couple entre eux,
- on exécute aux nœuds de début et/ou de fin pendant la simulation des indications correspondant à un flux de données multidiffusion, respectivement mis à disposition et/ou requis,
- au moyen de la simulation au contrôle, si des flux de données multidiffusion requis conformément aux requêtes de réservation peuvent être mis à disposition en conservant les paramètres de qualité de service spécifiés.

12. Système de simulation suivant la revendication 11, conformé et conçu pour saisir des informations sur les appareils de communication reliés entre eux au sein de la topologie donnée à l'avance et la topologie donnée à l'avance au moyen d'une recherche d'appareil de réseau et/ou pour les chercher dans un système d'ingénierie.

13. Système de simulation suivant l'une des revendications 11 ou 12,
dans lequel les ressources mises à disposition par les appareils d'infrastructure de réseau sur le data plane comprennent une largeur de bande, un nombre de queue, un cache de queue et/ou un cache d'adresse de l'appareil d'infrastructure de réseau respectif.

14. Système de simulation suivant l'une des revendications 11 à 13,
conformé et conçu pour traiter des requêtes de réservation conformément à IEEE 802.1Qcc.

15. Système de simulation suivant l'une des revendications 11 à 14,
dans lequel les software-container reposent sur des control plane firmware des appareils de communication.

16. Système de simulation suivant la revendication 15, conformé et conçu de manière à ce que des reproducteurs de mémoire des software-container peuvent être recherchés dans un système de mémoire et de mise à disposition accessible en lecture et/ou en écriture à une pluralité d'utilisateurs.
